(19)

Europäisches
Patentamt
European
Patent Office
Office européen
des brevets

(11)　**EP 3 223 227 A1**

(12)　# EUROPEAN PATENT APPLICATION

(43) Date of publication:
　27.09.2017　Bulletin 2017/39

(51) Int Cl.:
　**G06Q 40/06** *(2012.01)*

(21) Application number: **17472001.1**

(22) Date of filing: **21.03.2017**

(84) Designated Contracting States:
　**AL AT BE BG CH CY CZ DE DK EE ES FI FR GB
　GR HR HU IE IS IT LI LT LU LV MC MK MT NL NO
　PL PT RO RS SE SI SK SM TR**
　Designated Extension States:
　**BA ME**
　Designated Validation States:
　**MA MD**

(30) Priority: **22.03.2016　BG 11224816**

(71) Applicant: **Asenov, Zharko
　1000 Sofia (BG)**

(72) Inventor: **Asenov, Zharko
　1000 Sofia (BG)**

(74) Representative: **Kostadinova, Rossitsa Kirilova
　Patent and Trademark Attorney
　11 Slaveikov sq.,
　Floor 1, office 5
　1000 Sofia (BG)**

(54)　**SYSTEM AND METHOD FOR PREDICTING FINANCIAL AND / OR MARKET DATA**

(57)　This invitation relates to a system and method for predicting data in real time, in particular, for the financial, commodity, stock, exchange and currency markets.

The system according to this invitation includes a client system, SVMR module and visualization module, wherein the client system (A) includes at least one client data base (1), client interface (2), the resultant data base (3); the visualization module includes the connected to the client interface (2) display device (4) and printing device (5) for printing the resultant data; the SVMR module is connected to the server system (B) together with the data base (6), the web server (7), the analytic computation group (8) and the configuration interface (9), wherein the analytic computation group (8) consists of consecutively-connected stationary wave transformation (SWT) module, SVMR module and an inverse stationary wave transformation (ISWT) module.

The method for predicting financial and/or market data according to the invention includes consecutive stationary wave transformation (SWT) of real and historical data for decomposing into coefficient arrays; SVMR processing of coefficient arrays obtained by SWT for obtainment of new historical forecast coefficient arrays; and inverse stationary wave transformation (ISWT) of the forecast arrays obtained from the SVMR processing for obtainment of the required forecast data. The system used according to this invention provides such optimal combination of modules that use the input financial and/or market data and processes them through the analytic computation module to obtained forecast financial and high-accuracy market data, achieved through their processing, by combining the stationary wave transformation method with the support vector method followed by Inverse wave transformation. Thus is made the data decomposition at several levels and the use of several preliminary trained SVMR models working in parallel, increasing thereby the accuracy of the forecast.

## Description

### TECHNICAL FIELD

The invention relates to a system and method for real time data prediction, in particular, for predicting data for financial, stock, commodity, exchange and currency markets, designated to be used for investment evaluations and by the business to assess the investment value, economic justification of transactions, data analysis, finding optimal solutions related to capital and resources, performance improvement, data exchange and analysis, processing large quantities of information when presented to managers for monitoring the market behavior and trends in branches, as well as for making planning financial decisions in all functional economic areas.

### BACKGROUND OF THE INVENTION

The investment, business communities, public and other institutions in order to assess the investment values, make economic justification of transactions and policies, monitor the trends in the areas and make key decisions, use the market trend data, subject of their interest.
Of particular importance is the timeliness of the data, i.e., to be able to retrieve actual and additional information in the form of reliable forecast data to justify the decision making.

The additional information in the form of forecasts is based on analysis and assessment of the actual information available in real-time, which (forecasts) are obtained by using different approaches to the market trend analysis to provide the user with the relevant information in advance when making a decision to participate in trade.
The methods used by brokerage companies and individual traders in analyzing the markets and forecast of the direction of price trends are generally divided into two different approaches: fundamental analysis and technical analysis.
The fundamental analysis is focused on the main macro- and/or micro-economic factors, such as the gross national product, central banks policies, inflation, unemployment rates, market share, revenues, profitability and supply/demand.
For the technical analysis are important the prerequisites in terms that all factors affecting a particular market at a time are already built into this market, even if these factors are based on mass psychology. Attention is focused on the use of technical developments, various indicators and theories for prediction of the market movements, to be achieved through the analysis for accurate predictions of the market behavior.
For these purposes are used data on the exchange trade, as usually these data are presented as tables or watch lists. Some of the most common technical indicators include indicators of trends (such as the levels of economic growth, gross domestic product /GDP/, interest rates, inflation, unemployment rates, money supply, foreign bank reserves, performance data, etc.), momentum indicators (the price rates in a certain period of time, showing the strength and weakness of the trend, falling stochastics, RSI and CCI) and volatility indicators that show the size and scale of the price fluctuations.
Often, in many technical indicators, mostly in the moving average indicators, are filtered out short-term changes in the price, so the main trend can be monitored. Unintended consequence of averaging is that this indicator lags behind the current market indicators. This leads to a lag / delay in the reaction of the traders and as a result of which loss of profits or losses can be generated. This shows the importance and the need for a precise, accurate method and system for data prediction.

There are mathematical models based on the wave transformation as time-frequency transformations that apply both in processing of acceleration signal, for example, in the gait analysis, in detecting defects, in the ultra-wideband (UWB) wireless communications, and in the finance.

A variety of applications of the method of support vector for regression, the so-called support vector machines (SVMR model) are known to predict data in various fields of engineering, especially in resolving classification and regression problems / issues, in classifying chemical substances for the purposes of scientific or medical research and for weather (climate) forecasting, analysis of time series of data for predicting future data, including for predicting financial and market data.

JP5276927 (B2) is a known system for predicting floods, containing a module for flood input data, a card module of a predetermined area, a data module of past floods, a module of flood criteria; a (SVMR) module previously trained to create forecast data and for predicting reference data and forecast data, and a visualization module, wherein all described modules form a client system. The client system is situated directly in the user computing capacities. According to the invention, the rainfall data in more than one observation point at the time of occurrence of floods are collected and analyzed by their entry into a support vector machine, by extracting the regularities and criteria for each of the multiple observation points, which are subsequently used to predict the unknown data.
In a scientific publication, Wei Hao Songnian Yo, 2006 IFIP, volume 207, pp 825-830; Knowledge Enterprise: Intelligent Strategies in Product Design, Manufacturing, and Management was published an article "Support Vector Regression for Financial Time Series Forecasting", describing a method for predicting financial data for a commodity exchange, creating predictive indices through SVMR. This method claims to provide a high level of accuracy in predicting, relying on the SVMR accuracy only, through improvement of the parameters.

The SVMR algorithm processes one time series of data, including multiple parameters that need to be analyzed and processed in order to obtain future forecast data. The disadvantage of this algorithm are the large number of factors, among which should be selected one set, using an algorithm that works best and provides the most accurate forecasts. The selection of operating parameters is made on an experimental basis, which does not guarantee the permanence and stability in the method application, reflecting in the insufficient accuracy of the forecast results, which does not correspond to the practical needs of making financial planning decisions in all functional economic areas.

Meanwhile, the known SVMR models perform a regression of a single time series of data, as the signal parameters obtained after the regression do not always present it in a sufficiently complex manner, which also affects the accuracy of the forecast data.

With the so described method, where data are regular and cyclical, it is difficult to choose an appropriate set of data to produce high precision results, still exists the effect of randomness and volatility, and these methods and systems insufficiently meet the practical needs for making financial planning decisions in all functional economic areas.

The task of the present invention is to provide a system and method that allow for such processing and preparation of the parameters of the input data, which to present them two-dimensionally or multi-dimensionally, depending on their complexity, as well as to be selected the optimal parameters in the processing of which to be achieved the required high accuracy and security of the forecast data, while avoiding the need for large expensive computing resources.

## TECHNICAL DESCRIPTION OF THE INVENTION

According to the invention the problem is solved through a system for predicting financial and /or market data, that includes a client system consisting of at least one client database, client interface, resultant database and a device for displaying and printing the resultant data; and a server system consisting of a database, web server, configuration interface that connects the client database and analytical computing group, where the analytical computing group includes in series connected module for stationary wave transformation (SWT), computing SVMR module and inverse stationary wave transformation (ISWT) module.

The client system includes:

The client database is selected from Postgres, Oracle or SQL Server database selected from Postgrad storing historical data and real-time data on the commodity price movements on the commodity market, the share price movements on the stock exchange or the foreign exchange rate movements on the FX markets.

The client interface is used for entering a query for forecast data, communicates with the configuration interface of the server system, receives the query forecast results and completes the resultant database.

The resultant client database in which are stored the forecast results received as a result of the application for predicting made.

The device for displaying the forecast data communicates with the client interface.

The device for printing the forecast data communicates with the client interface.

The server system includes:

Server database selected from Postgrad, Oraqle or SQL, which stores data received from an External database that can be the client database, data on financial markets or other stock or commodity exchange.

The web server provides an interface link between the internal infrastructure of the Server system by performing the network traffic and communication between the clients and the system.

Analytical computing group can be selected from all types of multiprocessor computers. The analytical computing group retrieves in real-time data from the database Server and processes them using wave transformation and SVMR models until the obtainment of new forecast data, which via the Web server and the Configuration interface return to the Client interface.

The Configuration interface configures the data to be predicted.

The linking client for data is software for establishing a link between the Client database and the Web server.

**In another embodiment,** the system, subject of the invention, communicates with additional external databases selected from: Standard & Poor's Global Industry Classification System or the US Government's North American Industry Classification System, Commitment of Traders, published by the US Commodity Futures Trading Commission, composite indices, for example, Deutcher Aktienindex, Financial Times Stock Exchange 100, Brent Crude Index, etc. that can provide correlation historical data on the target market in the database in the Server-database, and the analytical computing group uses these data to achieve a high accuracy of the data prediction.

The present invention relates also to a method for predicting financial market data by which are combined the capabilities of the stationary wave transformation (SWT) and the support vector method for the SVMR regression model, in which are successively performed the following steps:

a) Stationary wave transformation (SWT) of real and/or historical data until the decomposition into coefficient arrays.
b) SVMR processing of coefficient arrays received by WT until new historical forecast coefficient arrays;
c) Inverse stationary wave transformation (ISWT) of the forecast arrays received by SVMR processing until the obtainment of the required forecast data.

It is known that in order a SVMR model to operate, the same is trained in advance by using historical time series of data from past period, as part of these data are used for training, and another part of them is used for testing the model results.
Learning consists in multiple repetition of the forecast method using the same selected historical data to achieve minimum errors and deviations from the test historical data.

In more detail, SVMR processing of the coefficient arrays obtained by SWT includes the following steps:

I. PREPARATION OF THE SVMR model (training and testing) - work with historical data until the obtainment of the forecast historical data, which are compared with the test historical data.

1. Training:

1.a. Selecting a historical series of data (HD) from the selected market (currency pairs, exchange coefficients, prices of gold and precious metals);
1.b. Selecting a set of parameters of the SVMR model of training and testing;
1.c. Wave transformation of the selected data until the obtainment of a set of coefficient arrays (CA);
1.d. Normalization of each of the coefficient arrays in the range between 0 and 1;
1.e. Processing of each of the coefficient arrays with own/individual SVMR until the obtainment of forecast coefficient arrays (FCA);
1.f. inverse stationary wave transformation - ISWT of all forecast coefficient arrays together with the forecast data (FD);
1.g. Calculating /measuring the mean square error between the forecast data and the test data. The mean square error is recorded (HE1 of historical data);
1.h. Selecting new sets of parameters by the methods of Nelder-Mead and Particle Swarm Optimization method for fine and coarse adjustment of the parameters related to SVMR and stationary wave transformation and multiple repetition of steps under item 1.b through 1.g. until the obtainment of the minimum mean square errors;
1.i. Determining the working parameters of the SVMR and deviations from the test historical data.

2. Testing (additional training) of the model

2.a. In the trained SVMR model are entered actual data (AD) of the same selected market in real time and are repeated the steps from item 1.c through item 1.f. until the obtainment of forecast data (FD).
2.b. Comparing the obtained data (FD) with the real actual data (RAD) and calculating the mean square error (AE of the actual data) and the forecast data (coincides with item 1.g);
2.c. Determining the optimized parameters of the SVMR module.

II. THE SVMR MODULE OPERATION

3.a. The obtained optimized parameters of the SVMR module are set for the model operation when predicting data in real time;
3.b. Performing steps from item 1.c through item 1.f. by using actual data in real time to obtain the required forecast data.

The system applied according to this invention provides such optimal combination of modules that use input financial and/or market data and processes them through the analytical calculation module until the obtainment of forecast financial and market data with a high data accuracy achieved through their processing by combining the stationary wave transformation method with the support vector method, followed by inverse stationary wave transformation. Thus is achieved the data decomposition at several levels and the use of several working in parallel and pre-trained SVMR models, thereby increasing the accuracy of the forecast results. The resulting forecast data of the applied system and method are designed to predict financial and/or commodity and currency markets and serve to calculate a predictive technical / price indicator, as the ratio of the currency pair euro / dollar, prices of gold, oil, stocks, etc.

Another advantage is the use of intelligent method for parameters selection by applying the methods of Nelder - Mead and a set of particles through which is achieved coarse and fine adjustment and the most accurate results.

## DESCRIPTION OF THE ENCLOSED FIGURES

Figure 1     is a block diagram of the system for data prediction.
Figure 2     is a diagram of functioning of the analytic calculation module/1 market
Figure 3     is a detailed diagram of functioning of the analytic calculation module for predicting the prices on one target market using data from the correlation markets (multiple markets)

## AN EXAMPLE FOR THE INVENTION PERFORMANCE

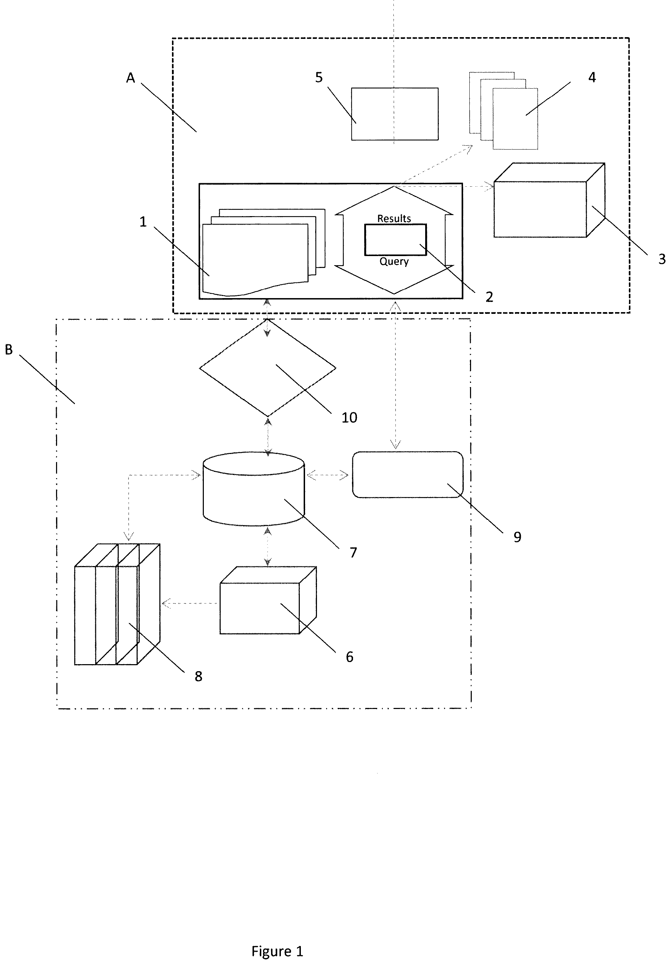

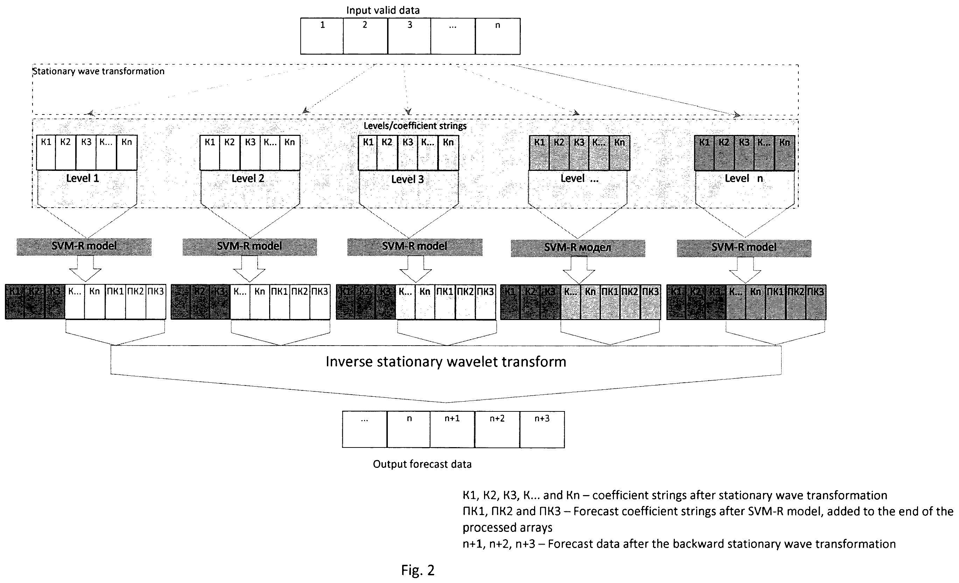

This invention is described in more detail with reference to the attached figures which serve to illustrate its embodiment intended for better understanding of the invention and do not limit its scope, whose block diagram is shown in Figures 1, 2 and 3.

In one embodiment of the invention, the system according to Figure 1 includes firstly the client system A with a client database 1 to predict the movement on a target market determined by the client.

The system includes also the resultant database 3, where are received and stored the forecast results, the display device 5 and the printing device 4;

The system also includes the client interface 2 connected to the configuration interface 9 of the server module B, which in turn is connected to the web server 7.

On the server system B is located the server database 6 in which in real time are received historical and / or actual data on the movement of indices / values on the target market of the client database 1 of the client system A. In other cases, in order to increase the accuracy of the prediction may be used also real-time data from other correlation markets;

The system includes also the analytical computation group 8 located on the server module B, which houses (there are located) the pre-trained SVM models.

The client - user of the system according to Figure 1 makes in real-time a query via the client interface 2, as through the configuration interface 9 the web server 7 downloads in real time the necessary actual current financial data from the client database and stores them in the database server 6. The web server 7 checks for proper configuration of the necessary data on the server database 6, verifies their integrity, and in the event that these conditions are not met, requires through the connecting client for data 10 the required additional data from the client database. All data received in the server database 6 enter the analytical computation group 8.

The computation group 8 receives the data on the price movements of the euro against the dollar from the server database 6, where the actual current input are decomposed through stationary wave transformation into several coefficient arrays (levels) corresponding to the number of the pre-trained SVMR models and they are subjected to processing by the support vector method until the obtainment of forecast coefficient arrays.

Newly received forecast coefficients are added to the end of the coefficient arrays processed and the same number of factors is removed from the beginning of the respective coefficient arrays processed. In this way, the frame of coefficients is temporally shifted forward. The so obtained new coefficient arrays that have at their end forecast coefficients are subjected to inverse stationary wave transformation until the obtainment of the forecast price of the euro against the dollar. The resulting forecast prices are sent via the web server 7 and the configuration interface 9 to the client interface 2, where they enter (are completed) in the resultant client database 3 or are displayed in the form of graphics by the display device 4 or are printed in reference tables or lists for monitoring by the printing device 5.

In another embodiment the system includes also additional correlation data for other markets or currency pairs for which was found that there is a correlation in the movement of the respective indicators. For example, for a currency pair euro - dollar, the correlation data can be the data on the currency pair of dollar / Swiss franc and euro / Swiss franc, and also the price movement of troy ounce of gold at the exchange. Using additional correlation markets in predicting the price on the target market is aimed at improving the forecast accuracy by introducing additional data in the SVMR model.

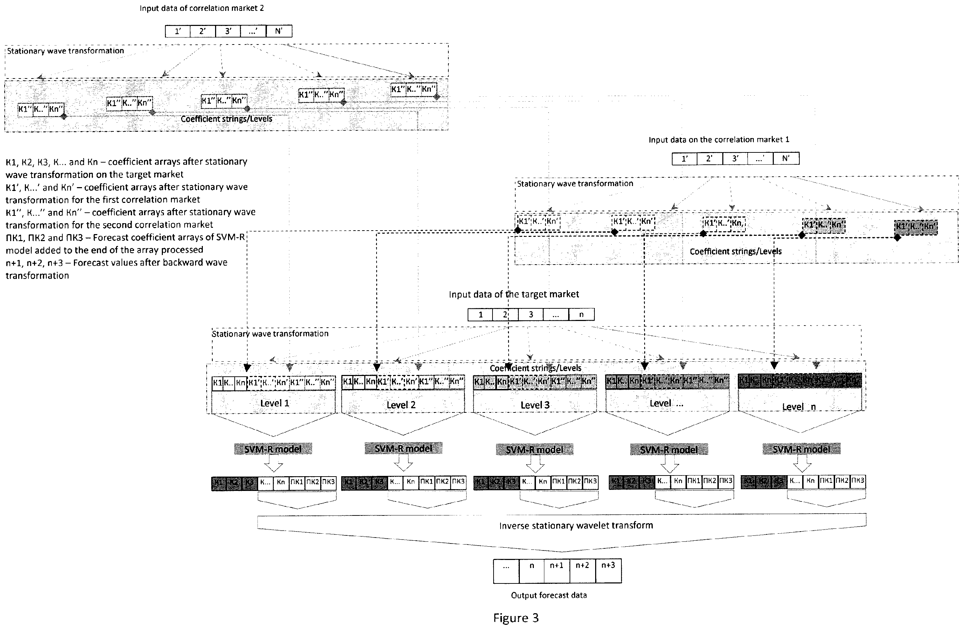

In this embodiment, upon making a query by a client - user of the system according to Figure 3 it makes in real-time a query through the client interface 2, as through the configuration interface 9 the web server 7 downloads in real-time the required actual current financial data from the client databases 1, databases of the correlation market and correlation market 1 and correlation market 2, and stores them in the database server 6. The web server 7 checks for the proper configuration of the required data on the server database 6, verifies their integrity, and in the event that these conditions are not met, requires through the connecting client for data 10 the required additional data from the client database 1, the database of correlation market 1 and correlation market 2. All data received in the server database 6 enter the analytical computation group 8 (data crunching cluster).

The computation group 8 receives the data on the price movement of the euro against the dollar, correlation market 1 and correlation market 2 of the server database 6, and the actual current input of the target market, the correlation market 1 and the correlation market 2 are separately decomposed through stationary wave transformation into an equal number of levels/arrays, where for each level every market forms its own coefficient arrays. Before their receipt for processing in the respective SVMR, the coefficient arrays from each level of the target market and the respective levels of correlation market 1 and correlation market 2 unite in a common coefficient array, and the coefficient arrays of correlation market 1 are added to the end of the coefficient arrays of the target market, and the coefficient arrays of correlation market 2 to the end of the common arrays. The number of arrays corresponds to the number of pre-trained SVMR models. The coefficient arrays are subjected to processing by the support vector method until the obtainment of forecast coefficient arrays.

The newly obtained forecast coefficients are added to the end of the coefficient arrays as processed and the same number of coefficients is removed from the beginning of the respective coefficient arrays as processed. In this way, the frame of coefficients is temporally shifted forward. The so obtained new coefficient arrays that have at their end forecast coefficients are subjected to inverse stationary wave transformation until the obtainment of the forecast price of the euro against the dollar.

The resulting forecast prices are sent via the web server 7 and the configuration interface 9 to the client interface 2 where they enter (are completed) in the resultant client database 3 or are displayed in the form of graphics by the display device 4 or are printed in reference tables or lists for monitoring by the printing device 5.

An example for predicting the movement of the currency pair of the dollar against the euro for 2015.03.24, 22:01 to 22:15 is given. In the training of the SVMR model are set historical data from 2015-03-24 - 18:00:00 to 22:00:00, including four prices for each minute - initial price, highest price, lowest price and final price. Extract from the data used for the model training are presented below:

| Date and time | Initial price | Highest price | LowestEnd price | price |
|---|---|---|---|---|
| 24.03.2015 18:00 | 1.09047 | 1.09069 | 1.09037 | 1.09068 |
| 24.03.2015 18:01 | 1.09066 | 1.09108 | 1.09065 | 1.09101 |
| 24.03.2015 18:02 | 1.09102 | 1.09139 | 1.09102 | 1.09113 |
| 24.03.2015 18:03 | 1.09113 | 1.09128 | 1.0911 | 1.09122 |
| 24.03.2015 18:04 | 1.09128 | 1.09153 | 1.09128 | 1.09147 |
| 24.03.2015 18:05 | 1.09148 | 1.09148 | 1.09129 | 1.09129 |
| 24.03.2015 18:06 | 1.09131 | 1.09138 | 1.09129 | 1.09136 |
| 24.03.2015 18:07 | 1.09137 | 1.09138 | 1.09096 | 1.09096 |
| 24.03.2015 18:08 | 1.09097 | 1.09135 | 1.09096 | 1.09135 |
| 24.03.2015 18:09 | 1.09136 | 1.09167 | 1.09135 | 1.0915 |
| 24.03.2015 18:10 | 1.09153 | 1.0916 | 1.09137 | 1.0915 |
| 24.03.2015 18:11 | 1.09149 | 1.0916 | 1.09149 | 1.0916 |
| 24.03.2015 18:12 | 1.09162 | 1.09199 | 1.09162 | 1.09197 |
| 24.03.2015 18:13 | 1.09205 | 1.09253 | 1.09196 | 1.09225 |
| 24.03.2015 18:14 | 1.09225 | 1.0923 | 1.09194 | 1.09195 |
| ... | ... | ... | ... | ... |
| 2015-03-24 21:51 | 1.09276 | 1.09277 | 1.09263 | 1.09267 |
| 2015-03-24 21:52 | 1.09267 | 1.09268 | 1.09261 | 1.09261 |
| 2015-03-24 21:53 | 1.09263 | 1.09294 | 1.09263 | 1.09294 |
| 2015-03-24 21:54 | 1.09294 | 1.09294 | 1.09282 | 1.09289 |
| 2015-03-24 21:55 | 1.09289 | 1.09296 | 1.09287 | 1.09291 |
| 2015-03-24 21:56 | 1.0929 | 1.09296 | 1.09289 | 1.09289 |
| 2015-03-24 21:57 | 1.09291 | 1.09294 | 1.09274 | 1.09274 |
| 2015-03-24 21:58 | 1.09274 | 1.09274 | 1.09242 | 1.09255 |
| 2015-03-24 21:59 | 1.09254 | 1.09257 | 1.09241 | 1.09248 |
| 2015-03-24 22:00 | 1.09248 | 1.09248 | 1.09236 | 1.09245 |

This data are subjected to stationary wave transformation which has a wave modified to modeled input data, achieved by testing multiple families of waves on the principle of trial and error until the detection of a wave that presents most accurately the input data and with the lowest number of factors. In the preparation the wave coefficients are used as samples, and the historical coefficients as labels at the corresponding wave level/coefficient array and coefficients of the neighboring wave levels. As for the preparation of a given SVMR model, located on n wave levels and m historical values for wave level 1 for the sample coefficient x at time t (xl, t) is presented the vector y on the labels to the changing function of the SVMR:

$$Xlt=\{Yl\text{-}n,t\text{-}1,Yl\text{-}n,t\text{-}2,Yl\text{-}n,t\text{-}3...Yl\text{-}n,t\text{-}m,Yl\text{-}n+1,t\text{-}1,Yl\text{-}n+1,t\text{-}2,Yl\text{-}n+1,t\text{-}3,...Yl\text{-}n+1,t\text{-}m,...Yl,t\text{-}$$

$$1,Yl,t\text{-}2,Yl,t\text{-}3...Yl,t\text{-}m,Yl+1,t\text{-}1,Yl+1,t\text{-}2,Yl+1,t\text{-}3,...Yl+1,t\text{-}m,Yl+n,t\text{-}1,Yl+n,t\text{-}2,Yl+n,t\text{-}3,...Yl+n,t\text{-}m\}$$

The coefficient arrays resulting from the wave transformation provide two-dimensional (on two levels) presentation of the input values or multidimensional (on many levels) presentation, when the input data are complex and are subjected to several wave transformations. In making the wave transformation, the original input values are decomposed on as many levels / arrays for as is provided the computational resource, and the input values are presented on each level in the form of an array of coefficients that are normalize coarsely in the range between 0 and 1.

The starting parameters of the models for each level / arrays are subjected to intelligent optimization method by applying PSO and the Nelder Mead method. For PSO, we have used five steps for five particles, where the best performing two sets of parameters were selected and then these two best performing two sets of parameters were subjected to optimization in five steps by the Nelder - Mead method.

The new optimized parameters are entered in the SVMR models for each level and the system is started until the obtainment of new forecast data. The process is repeated many times until the achievement of forecast data that are to the maximum extent close to the historical data are used for the system optimization.

The parameters of the SVMR models in which the system is input data that are to maximum extent close to the historical data are set as working parameters and the system is ready for forecasting in real conditions / time.

The result are the forecast data whose error is significantly less compared to the forecast data obtained when using the ordinary SVMR without pre-subjecting the data to wave transformation.

Data were subjected to stationary wave transformations of type Coif1 by decomposing into nine coefficient arrays that are processed by nine trained SVM models using the cores Gaussian Radial Basis Function.

Parameters of the SVM model for the first level: price 100, Epsilon 0.00004, the first parameter of the computing core 18.1, the second parameter of the computing core 0.108544, ratio of adjacent levels 0.8, error tolerance of 0.0000001, auto regression delay 2.

Parameters of the SVM model for the second to ninth level: price 60 Epsilon 0.0000473067, the first parameter of the computing core 18.852, the second parameter of the computing core 0.108544, ratio of adjacent levels 0.5, error tolerance of 0.01, the auto regression delay 2

| Initial price | | | | |
|---|---|---|---|---|
| Real price | Envisaged price Ordinary SVMR | Envisaged price under the invention | Error with ordinary SVMR | Error under the invention |
| 1.09245 | 1.09172 | 1.09195 | 0.00073 | 0.0005 |
| 1.0924 | 1.09172 | 1.09194 | 0.00068 | 0.00046 |
| 1.09231 | 1.09174 | 1.09192 | 0.00057 | 0.00039 |
| 1.09234 | 1.09171 | 1.09192 | 0.00063 | 0.00042 |
| 1.09232 | 1.09168 | 1.09191 | 0.00064 | 0.00041 |
| 1.09217 | 1.09167 | 1.0919 | 0.0005 | 0.00027 |
| 1.09225 | 1.09162 | 1.0919 | 0.00063 | 0.00035 |
| 1.09227 | 1.09155 | 1.0919 | 0.00072 | 0.00037 |
| 1.09225 | 1.09146 | 1.09189 | 0.00079 | 0.00036 |
| 1.09227 | 1.09134 | 1.09189 | 0.00093 | 0.00038 |
| 1.09233 | 1.09119 | 1.09189 | 0.00114 | 0.00044 |

(continued)

| Initial price | | | | |
|---|---|---|---|---|
| Real price | Envisaged price Ordinary SVMR | Envisaged price under the invention | Error with ordinary SVMR | Error under the invention |
| 1.09235 | 1.09101 | 1.0919 | 0.00134 | 0.00045 |
| 1.09228 | 1.09082 | 1.0919 | 0.00146 | 0.00038 |
| 1.09217 | 1.09063 | 1.0919 | 0.00154 | 0.00027 |

| Highest price | | | | |
|---|---|---|---|---|
| Real price | Envisaged price Ordinary SVMR | Envisaged price under the invention | Error with ordinary SVMR | Error under the invention |
| 1.09248 | 1.09444 | 1.09209 | -0.00196 | 0.00039 |
| 1.0924 | 1.09443 | 1.09208 | -0.00203 | 0.00032 |
| 1.09234 | 1.0943 | 1.09207 | -0.00196 | 0.00027 |
| 1.0924 | 1.09422 | 1.09205 | -0.00182 | 0.00035 |
| 1.09234 | 1.09418 | 1.09205 | -0.00184 | 0.00029 |
| 1.09227 | 1.09416 | 1.09204 | -0.00189 | 0.00023 |
| 1.09228 | 1.09406 | 1.09204 | -0.00178 | 0.00024 |
| 1.09228 | 1.09391 | 1.09204 | -0.00163 | 0.00024 |
| 1.09229 | 1.09372 | 1.09204 | -0.00143 | 0.00025 |
| 1.09231 | 1.09348 | 1.09204 | -0.00117 | 0.00027 |
| 1.09237 | 1.09317 | 1.09204 | -0.0008 | 0.00033 |
| 1.09235 | 1.09279 | 1.09204 | -0.00044 | 0.00031 |
| 1.09228 | 1.09236 | 1.09204 | -0.00008 | 0.00024 |
| 1.09236 | 1.09193 | 1.09204 | 0.00043 | 0.00032 |

| Lowest price | | | | |
|---|---|---|---|---|
| Real price | Envisaged price Ordinary SVMR | Envisaged price under the invention | Error with ordinary SVMR | Error under the invention |
| 1.0924 | 1.09081 | 1.09182 | 0.00159 | 0.00058 |
| 1.09224 | 1.09081 | 1.09181 | 0.00143 | 0.00043 |
| 1.0923 | 1.09082 | 1.09179 | 0.00148 | 0.00051 |
| 1.09233 | 1.09078 | 1.09178 | 0.00155 | 0.00055 |
| 1.09217 | 1.09077 | 1.09177 | 0.0014 | 0.0004 |
| 1.09217 | 1.09076 | 1.09176 | 0.00141 | 0.00041 |
| 1.09223 | 1.09073 | 1.09176 | 0.0015 | 0.00047 |
| 1.09225 | 1.09068 | 1.09176 | 0.00157 | 0.00049 |
| 1.09223 | 1.09061 | 1.09176 | 0.00162 | 0.00047 |
| 1.09225 | 1.09052 | 1.09176 | 0.00173 | 0.00049 |

(continued)

| Lowest price | | | | |
|---|---|---|---|---|
| Real price | Envisaged price Ordinary SVMR | Envisaged price under the invention | Error with ordinary SVMR | Error under the invention |
| 1.09233 | 1.09042 | 1.09176 | 0.00191 | 0.00057 |
| 1.09225 | 1.09028 | 1.09176 | 0.00197 | 0.00049 |
| 1.09215 | 1.09014 | 1.09176 | 0.00201 | 0.00039 |
| 1.09217 | 1.09001 | 1.09177 | 0.00216 | 0.0004 |

| End price | | | | |
|---|---|---|---|---|
| Real price | Envisaged price Ordinary SVMR | Envisaged price under the invention | Error with ordinary SVMR | Error under the invention |
| 1.0924 | 1.09405 | 1.09196 | -0.00165 | 0.00044 |
| 1.09232 | 1.09405 | 1.09195 | -0.00173 | 0.00037 |
| 1.09233 | 1.09392 | 1.09194 | -0.00159 | 0.00039 |
| 1.09233 | 1.09384 | 1.09192 | -0.00151 | 0.00041 |
| 1.09217 | 1.09381 | 1.09191 | -0.00164 | 0.00026 |
| 1.09225 | 1.09379 | 1.09191 | -0.00154 | 0.00034 |
| 1.09228 | 1.09369 | 1.0919 | -0.00141 | 0.00038 |
| 1.09225 | 1.09354 | 1.0919 | -0.00129 | 0.00035 |
| 1.09226 | 1.09335 | 1.0919 | -0.00109 | 0.00036 |
| 1.09227 | 1.09311 | 1.0919 | -0.00084 | 0.00037 |
| 1.09234 | 1.0928 | 1.0919 | -0.00046 | 0.00044 |
| 1.09228 | 1.09242 | 1.09191 | -0.00014 | 0.00037 |
| 1.09217 | 1.092 | 1.09191 | 0.00017 | 0.00026 |
| 1.09236 | 1.09157 | 1.09191 | 0.00079 | 0.00045 |

**Claims**

1. A system for predicting financial and/or market data consisting of a client system, a SVMR module and visualization module, **characterized by** the feature that the client system (A) includes at least one client data base (1), client interface (2), resultant data base (3); the visualization module includes connected to the client interface (2) display device (4) and device (5) for printing the resultant data; and the SVMR module is included in the server system (B) together with the data base (6), web server (7), analytic computation group (8) and configuration interface (9), and the analytic computation group (8) consists of a consecutively-connected module for stationary wave transformation (SWT), a SVMR module and an inverse stationary wave transformation (ISWT) module.

2. A method for predicting financial and/or market data according to Claim 1, **characterized by** the feature that in the system are performed consecutively the following steps:

   a) stationary wave transformation (SWT) of real and/or historical data to be composed into more than one coefficient arrays;
   b) SVMR processing of coefficient arrays obtained by SWT to new historical coefficient arrays;
   c) Inverse stationary wave transformation (ISWT) of the forecast arrays obtained by SVMR processing to the required forecast data.

**3.** A method according to Claim 2, **characterized by the feature that** the SVMR processing of the coefficient arrays obtained by SWT includes:

I. PREPARATION OF THE SVMR module (training and testing) - handling historical data until obtainment of forecast historical data to be compared with the test historical data.

1/ Training:

1.a) Selection of historical data series (ID) from the selected market (currency pairs, exchange rate, prices of gold and precious metals);

1.b) Selection of set of parameters of the SVMR model for training and testing;

1.c) Wave transformation of the selected data until obtaining a set of coefficient arrays (CAs);

1.d) Normalization of each of the coefficient arrays in the range between -1 and 1;

1.e) Pprocessing of each of the coefficient arrays by own/individual SVMR until obtaining forecast coefficient arrays (FCSs);

1.f) Inverse stationary wavelet transformation - ISWT of all forecast coefficient arrays together until obtaining forecast data (FD);

1.g) Ccalculation/measurement of the mean square error between the forecast data and the test data. The mean square error (HE1 of historical data) is recorded;

1.h) Selection of new sets of parameters by the Nelder-Mead and Particle Swarm Optimization method for fine and coarse adjustment of the parameters associated with SVMR and stationary wave transformation and multiple repletion of steps from item 1.b) through item 1.j) until obtaining the minimum mean square errors;

1.i) Determining the working parameters of the SVMR and the deviations from the test historical data.

2) Testing (additional training) of the model

2.a) In the trained SVMR model are entered actual data (AD) from the same selected market in real time, and steps from item 1.c) through item 1.f) until obtaining forecast data (FD).

2.b) Comparison of the obtained forecast data (FD) and the real actual data (RAD) and calculation of the mean square error (MSE of actual data) and forecast data (coincides with item 1.g);

2.c) Determining the optimized parameters of the SVMR model.

II. THE SVMR MODEL OPERATION

3.a) The optimized parameters obtained by the SVMR model are specified for the model operation for data prediction in real time;

3.b) Performance of step from 1.c) through 1.f) using actual data in real time to obtain the required forecast data.

**4.** A method according to Claim 2 **characterized by the feature that** the real and/or the historical data for the target market subjected to SWT are composed into more than one coefficient arrays.

**5.** A method according to Claim 2 **characterized by** the feature that the coefficient arrays are processed analytically by pre-trained SVMR models.

**6.** A method according to Claim 2 **characterized by** the feature that to WT are subjected besides real and/or historical data for the target market, also historical and/or real auxiliary data from one or more correlated market feeds.

A

5          4

1

Results

Query

2

3

B

10

7

9

8          6

Figure 1

Input valid data

| 1 | 2 | 3 | ... | n |
|---|---|---|-----|---|

Stationary wave transformation

Levels/coefficient strings

| K1 | K2 | K3 | K... | Kn |
|----|----|----|------|----|
Level 1

| K1 | K2 | K3 | K... | Kn |
|----|----|----|------|----|
Level 2

| K1 | K2 | K3 | K... | Kn |
|----|----|----|------|----|
Level 3

| K1 | K2 | K3 | K... | Kn |
|----|----|----|------|----|
Level ...

| K1 | K2 | K3 | K... | Kn |
|----|----|----|------|----|
Level  n

SVM-R model     SVM-R model     SVM-R model     SVM-R модел     SVM-R model

| K1 | K2 | K3 | K... | Kn | ПК1 | ПК2 | ПК3 |
| K1 | K2 | K3 | K... | Kn | ПК1 | ПК2 | ПК3 |
| K1 | K2 | K3 | K... | Kn | ПК1 | ПК2 | ПК3 |
| K1 | K2 | K3 | K... | Kn | ПК1 | ПК2 | ПК3 |
| K1 | K2 | K3 | K... | Kn | ПК1 | ПК2 | ПК3 |

Inverse stationary wavelet transform

| ... | n | n+1 | n+2 | n+3 |
|-----|---|-----|-----|-----|

Output forecast data

K1, K2, K3, K... and Kn – coefficient strings after stationary wave transformation
ПК1, ПК2 and ПК3 – Forecast coefficient strings after SVM-R model, added to the end of the processed arrays
n+1, n+2, n+3 – Forecast data after the backward stationary wave transformation

Fig. 2

Input data of correlation market 2

| 1' | 2' | 3' | ...' | N' |

Stationary wave transformation

К1" К..." Kn"    K1" К..." Kn"    K1" К..." Kn"    K1" К..."Kn"    K1" К..." Kn"

Coefficient strings/Levels

К1, К2, К3, К... and Kn – coefficient arrays after stationary
wave transformation on the target market
К1', К...' and Kn' – coefficient arrays after stationary wave
transformation for the first correlation market
К1'', К...'' and Kn'' – coefficient arrays after stationary wave
transformation for the second correlation market
ПК1, ПК2 and ПК3 – Forecast coefficient arrays of SVM-R
model added to the end of the array processed
n+1, n+2, n+3 – Forecast values after backward wave
transformation

Input data on the correlation market 1

| 1' | 2' | 3' | ...' | N' |

Stationary wave transformation

К1' К..' Kn'    K1' К..' Kn'    K1' К..' Kn,    K1' К..' Kn'    K1' К..' Kn'

Coefficient strings/Levels

Input data of the target market

| 1 | 2 | 3 | ... | n |

Stationary wave transformation

Coefficient strings/Levels

| К1 К.. Kn К1' К..' Kn' К1" К.." Kn" | К1 К.. Kn К1' К..' Kn' К1" К.." Kn" | К1 К.. Kn К1' К..' Kn' К1" К.." Kn" | К1 К.. Kn К1' К..' Kn' К1" К.." Kn" | ПК1 Кn К1 К2 К3 К1' К..' Kn' |
| Level 1 | Level 2 | Level 3 | Level ... | Level n |

SVM-R model    SVM-R model    SVM-R model    SVM-R model    SVM-R model

| К1 К2 К3 К... Kn ПК1 ПК2 ПК3 | К1 К2 К3 К... Kn ПК1 ПК2 ПК3 | К1 К2 К3 К... Kn ПК1 ПК2 ПК3 | К1 К2 К3 К... Kn ПК1 ПК2 ПК3 | К1 К2 К3 К... Kn ПК1 ПК2 ПК3 |

Inverse stationary wavelet transform

| ... | n | n+1 | n+2 | n+3 |

Output forecast data

Figure 3

Europäisches
Patentamt
European
Patent Office
Office européen
des brevets

**EUROPEAN SEARCH REPORT**

Application Number

EP 17 47 2001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID S LINTHICUM: "excerpt from: Chapter 8, Transactional Middleware and EAI", ENTERPRISE APPLICATION INTEGRA, XX, XX, 12 November 1999 (1999-11-12), pages 141-159, XP007902998, * the whole document * | 1-6 | INV. G06Q40/06 |
| A,D | Wei Hao ET AL: "Support Vector Regression for Financial Time Series Forecasting" In: "Knowledge Enterprise: Intelligent Strategies in Product Design, Manufacturing, and Management", 1 January 2006 (2006-01-01), Springer US, XP055389463, ISBN: 978-0-387-34402-7 vol. 207, pages 825-830, DOI: 10.1007/0-387-34403-9_115, * the whole document * | 1-6 | |

TECHNICAL FIELDS SEARCHED (IPC)

G06Q

The present search report has been drawn up for all claims

| Place of search | Date of completion of the search | Examiner |
|---|---|---|
| The Hague | 10 July 2017 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5276927 B

**Non-patent literature cited in the description**

- **WEI HAO SONGNIAN YO.** *IFIP,* 2006, vol. 207, 825-830